# EUROPEAN PATENT SPECIFICATION

(11) **EP 2 837 704 B1**
(45) Date of publication and mention of the grant of the patent: **24.08.2016**
(21) Application number: 14182465.6
(22) Date of filing: 11.11.2011
(51) Int. Cl.: C22C 21/02, C22C 21/14

(54) **Aluminium alloy**
Aluminiumlegierung
Alliage d'aluminium

(43) Date of publication of application: 18.02.2015
(62) Divisional of application: 11188792.3
(73) Proprietor: Novelis, Inc., Atlanta, GA 30326 (US)
(72) Inventor: Schellinger, Frank, 3953 Varen (CH); Bassi, Corrado, 3970 Salgesch (CH); Bezencon, Cyrille, 3971 Chermignon (CH)
(74) Representative: Weickmann & Weickmann PartmbB

(56) References cited:
- WO-A1-98/14626
- US-A- 4 808 247

## Description

This invention concerns an aluminium alloy primarily intended for use in transportation vehicles. The aluminium alloy is based on the Al-Si-Cu system and is particularly suited for use as a sheet product in automobiles. The aluminium alloy is also suitable for use as a clad layer on a composite sheet. The invention also concerns a joined structure comprising a steel component and an aluminium component.

The use of aluminium alloys in the production of automobiles and other transportation vehicles has been established for many years. A range of different alloys are used depending on the particular requirements of specific components. In certain applications it is desirable that the material be of high strength. Yet other applications require higher formability and, in such cases, strength may be considered less important. There has also been a desire for materials that deform easily under impact, for example in the event of collision with pedestrians and such materials may have even lower strengths. Aluminium alloy products for such applications are provided in various forms, from sheet to forgings, extrusions to castings.

Typically the aluminium alloys are from the 6XXX series of alloys, whose principal alloying elements are Mg and Si, or from the 5XXX series of alloys, where the principal alloying element is Mg. There has been occasional use of the 2XXX series alloys where the principal alloying element is Cu. For an understanding of the number designation system most commonly used in naming and identifying aluminium and its alloys see "International Alloy Designations and Chemical Composition Limits for Wrought Aluminum and Wrought Aluminum Alloys", published by The Aluminum Association, revised February 2009.

Clad sheets or composite sheets are also known for use in automotive and other applications. In such products the composite sheet consists of at least two layers of alloys with different chemical compositions. One layer, typically called the core, provides bulk mechanical properties, whilst the second layer, typically called the clad layer, provides specific surface characteristics. The clad layer is usually thinner than the core layer. Commonly the core layer of one composition is interposed between two clad layers of another composition to form a three-layer sheet, both clad layers having the same composition. But this is not always the case and a composite sheet may be provided of multiple layers, each layer having a different composition.

Aluminium alloys are not the only materials used in construction of transportation vehicles; steel remains an important structural material. Whilst concerned primarily with automotive structures, the invention described herein is equally applicable to other transportation vehicles including but not limited to aircraft and land vehicles such as trains, buses and trucks as well as other industrial applications where there is a need to join aluminium components to steel components. The case of automotive structures is used to illustrate the background to the invention and to demonstrate its benefits.

At various locations within the automobile structure, the aluminium alloy must come into contact and be joined to a steel alloy product. This creates problems because aluminium and steel cannot be satisfactorily joined by conventional welding techniques, such as TIG, MIG, laser welding, plasma welding, etc., due to a large difference between liquidus temperatures and low inter-element solubility. Indeed, classically defined welding, in the sense of coalescence of two molten metals, does not occur because the temperatures used are generally not high enough to cause the steel to melt. Various terms are used, therefore, to describe the thermal joining process that takes place and such terms may include but are not limited to laser welding, braze welding and so on. In essence, and for the purposes of this invention, a structure that comprises an aluminium part joined to a steel part means one that arises from a thermal process that causes at least a part of the aluminium component to melt.

The binary Al-Fe equilibrium phase diagram indicates that various equilibrium intermetallic compounds such as Fe₂Al₅, FeAl₃, FeAl₂ and FeAl exist. These intermetallic compounds are known to be hard and brittle. In addition, the high heat input of conventional welding techniques and the resulting reaction and diffusion between the steel and aluminium parts can give rise to a thick layer of brittle intermetallic. The presence of such intermetallics at steel / aluminium interfaces may lead to poor mechanical properties and brittle fracture behavior of the joint. The joint between the aluminium and steel alloys can thus become a site of key structural weakness. A joint that has reasonable fracture strength, one that possesses sufficient ductility, is preferable.

Attempts have been made to improve the interfacial strength and ductility of such joints. One approach has been to reduce the heat input to the joining process by, for example, increasing the welding speed, adding a backing block to extract heat or interrupting the welding process. Such an approach is embodied within the known technique of Cold Metal Transfer braze-welding, (CMT). Disadvantages of this approach are that, with it, manufacturing is more complicated and more expensive, there is a reduced operating window that does not lend itself to mass production on an industrial scale and, although there is an improvement in interface strength, the fracture mode remains brittle.

A second approach to improve weldability has been to add Zn to the weld to promote formation of an Al-Zn, low melting point, eutectic structure. In this approach a Zn filler material is used without flux during the welding operation in an air atmosphere or a Zn cfadding is used on the steel component. A low heat input may also be used in combination. A problem with the use of Zn is that it tends to evaporate during laser welding. Further, Zn reduces the corrosion resistance of the joint region because it has a highly negative corrosion potential.

JP04768487B2 describes a method for obtaining a composite structure of aluminium and steel for motor vehicles which involves melting an aluminium layer of AA5182 alloy on a steel plate using a laser beam without flux.

US-A-4,814,022 describes a weldable aluminum alloy comprising Si and Mg defined by a trapezium having co-ordinates at; Si 0.5, Mg 0,1; Si 0.5 Mg 0.2; Si 1.3, Mg 0.5; Si1.3, Mg 0.1. The alloy further contains Cu between 0.1 and 0.5. The composition is controlled to limit precipitation of Mg₂Si during solidification after casting and the Mg₂Si precipitates developed in the alloy, and necessary for strengthening, arise from subsequent heat treatments. Although described as a weldable alloy, the examples describe the alloy being welded to itself, not to a steel component.

US-A-4,808,247 describes a process of making Al-Si-Cu-Mg alloys that involves the application of a final annealing step wherein the alloys described are heated to between 60-360°C, held at that temperature for a period, and cooled in a controlled manner. Three alloys are described, all of which contain Mg to promote the formation of Mg₂Si strengthening precipitates.

US-A-5,582,660 describes an alloy for use in automotive sheet comprising the following composition; Si >1.0 to about 1.3, Mg >0.25 to about 0.60, Cu about 0.5 to about 1.8, Mn about 0.01 to about 0.1, Fe about 0.01 to about 0.2, balance being substantially aluminium and incidental elements and impurities. The presence of Mg in combination with Si is essential for the formation of Mg₂Si strengthening precipitates.

Investigators have also considered the use of Al-Si solder alloys, as evidenced by the article "The Characterisation of the Intermetallic Fe-Al Layer of Steel-Aluminium Weldings" by Potesser et al, published in the EPD Congress, 2006.

Further recommendations have been to reduce the thickness of the interface zone created when joining aluminium to steel but this requires very tight process window control during welding and is extremely difficult to achieve on a production scale.

Despite these proposals, there remains a significant unmet requirement to improve the quality of a joint between an aluminium alloy product and a steel alloy product.

It is an object of the invention to provide an aluminium alloy which can be welded to a steel alloy without the use of a filler alloy and which provides an interface possessing a reasonable strength and a ductile fracture mechanism.

In accordance with the object of the invention an aluminium alloy is provided comprising the following composition, all values in weight %:

| | |
|---|---|
| Si | 0.25 - 1.5 |
| Cu | 0.3 - 1.5 |
| Fe | up to 0.5 |
| Mg | <0.1 |
| Mn | up to 0.2 |

all other elements less than or equal to 0.05 each or less than or equal to 0.15 in total balance aluminium , wherein the aluminium alloy is an aluminium alloy clad layer.

In contrast to the prior art solutions to the technical problem, the inventors have adapted the aluminium alloy composition to improve the wettability of the aluminium alloy, to reduce the susceptibility of the alloy to hot cracking shortness, to modify the diffusion of Fe from the steel into the aluminium alloy product and to modify the type of intermetallic formed such that the FeAl phase is favoured close to the steel instead of the FeAl₃-type. The interface is characterized by a dense intermetallic layer comprising two intermetallic types, FeAl and Fe₂Al₅, with FeAl in the zone adjacent the steel alloy. In addition, in contrast to the prior art, the interface region created with this inventive alloy is relatively large, comprising 3 distinct zones. This thicker interface zone permits the use of wider processing parameters, rendering the new alloy suitable for large scale industrial production.

Si is added to the alloy to reduce the solidus temperature and to improve the wettability. For these reasons the lower limit of Si is set at 0.25. Further, additions of Si help reduce the susceptibility of hot cracks forming after welding and a preferred lower limit for Si is 0.5. The upper limit of Si is set to 1.5 because a higher Si level favours the formation of Al(Fe3,Si)-type intermetallics and has a negative effect on ductility and the preferred upper limit of Si is 1.25.

Cu is also added to the alloy to reduce the solidus temperature and to improve the wettability but it is also added to modify the Al-Fe intermetallic type. For these reasons the lower limit of the Cu content is set at 0.3. The amount of Cu should not be too high, however, because a higher Cu content increases the risk of hot cracking. Further, higher Cu contents also reduce the joint ductility. For these reasons the upper limit of Cu is set at 1.5 although in some situations setting an upper limit for Cu of 1.25 may be desirable.

Whilst Mg in combination with Si would lead to the formation of strengthening Mg₂Si precipitates, that is not helpful here because Mg does not contribute to the improvement of the joint quality. As the Mg content is increased there are declines in the ductility of the joint, in the formability of the alloy and in the quality of the weld, porosity and cracking. A small amount of Mg may be tolerated, (to accommodate scrap recycling), but the Mg content should be <0.1.

Mn also makes no significant impact on the hot cracking susceptibility or formability but it may be present in recycled metal from other sources. Here it can be tolerated in amounts higher than would be the case for other elements. For this reason the upper limit for Mn is set to 0.2.

Other elements such as, but not limited to, Zn, Ni, Ti, B, Cr and V may be present in the form of trace elements or unavoidable impurities or, in the case of Ti and B, through the addition of grain refiners. Each such trace element or unavoidable impurity or grain refining element is present in an amount less than 0.05 each and less than 0.15 in total. The balance of the alloy is aluminium.

In accordance with a second object of the invention a composite aluminium sheet is provided, said composite aluminium alloy sheet comprising a core and at least one clad layer wherein the clad layer comprises the following composition, all values in weight %:

| | |
|---|---|
| Si | 0.25-1.5 |
| Cu | 0.3-1.5 |
| Fe | up to 0.5 |
| Mg | <0.1 |
| Mn | up to 0.2 |

all other elements less than or equal to 0.05 each or less than or equal to 0.15 in total balance aluminium.

In the context of composite sheets, the term "core" layer is used to indicate the alloy contributing most to the bulk properties of the composite sheet and the term "clad" is used to indicate the alloy at the surface providing surface properties for the composite sheet. Composite sheets may comprise a single clad layer on a single core layer although more often they comprise two clad layers on either side of the single core layer. Typically the clad layers are thinner than the core layer, on their own and as a combined total.

Where the alloy is used as a clad layer on a composite sheet, the core layer may be a 6XXX series alloy or a 5XXX series alloy as understood by reference to the Aluminum Association Teal Sheets. If the core layer is a 6XXX series alloy it may be selected from the group consisting of AA6016, AA6016A, AA6014, AA6011, AA6111, AA6009, AA6010, AA6022 and AA6451. If the core alloy is a 5XXX series alloy it may be selected from the group consisting of AA5005, AA5152, AA5052, AA5018, AA5454, AA5754, AA5056, AA 5456, AA5182, AA5186, AA5059, AA5083 and AA5383. An advantage of using the new alloy in a composite sheet, wherein the core is a high strength alloy, is that the entire sheet is far less susceptible to distortion during further processing of the vehicle body such as, for example, during the thermal treatment of paint baking.

In accordance with a third object of the invention a joined structure is provided wherein the joined structure comprises a steel component and an aluminium alloy component joined thereto and wherein the aluminium alloy component is made from an aluminium alloy comprising the following composition, all values in weight %:

| | |
|---|---|
| Si | 0.25 - 1.5 |
| Cu | 0.3 - 1.5 |
| Fe | up to 0.5 |
| Mg | <0.1 |
| Mn | up to 0.2 |

all other elements less than or equal to 0.05 each or less than or equal to 0.15 in total balance aluminium.

In accordance with a fourth object of the invention a joined structure is provided wherein the joined structure comprises a steel component and an aluminium alloy component joined thereto and wherein the aluminium alloy component is made from a composite aluminium alloy sheet comprising a core and at least one clad layer wherein the clad layer comprises the following composition, all values in weight %:

| | |
|---|---|
| Si | 0.25 - 1.5 |
| Cu | 0.3 - 1.5 |
| Fe | up to 0.5 |
| Mg | <0.1 |
| Mn | up to 0.2 |

all other elements less than or equal to 0.05 each or less than or equal to 0.15 in total balance aluminium.

For the purpose of this invention the word "joined" is intended to mean a joint resulting from a thermal process operating at a temperature that causes melting of at least a part of the inventive alloy component. The thermal process used does not lead to melting of the steel component. Therefore "welding", in the classic sense of coalescence of two or more molten metals, does not occur. Since the use of a flux is not necessary, (although it could be used), the process is not classical brazing although one can describe the process as fluxless brazing. Others have used the term "braze-welding", Under the application of sufficient heat, most conveniently from a laser but conceivably from other sources, the alloy of the aluminium component melts and reacts with the surface layers of the steel component, including the zinc coating, if such a coating is present. The temperature is sufficiently high that diffusion of Fe from the steel component into the molten aluminium occurs and, when the molten aluminium cools and freezes, a series of layers rich in intermetallic compounds is formed with the Al/Fe ratio increasing as the distance from the steel component increases.

According to a fifth object of the invention there is provided a method of making a joined structure wherein the joined structure comprises a steel component and an aluminium alloy component and wherein the steel and aluminium alloy components are joined by a thermal process that causes at least a part of the aluminium component to melt and wherein the aluminium alloy component is made from an alloy that has the following composition:

| | |
|---|---|
| Si | 0.25 -1.5 |
| Cu | 0.3 - 1.5 |
| Fe | up to 0.5 |
| Mg | <0.1 |
| Mn | up to 0.2 |

all other elements less than or equal to 0.05 each or less than or equal to 0.15 in total balance aluminium.

The aluminium alloy according to the invention is intended for primary use in sheet form. Although the primary focus is on automotive structures, the skilled reader will realize that the alloy of the invention, and its use in joined structures incorporating steel, can be applicable to many different applications in the transportation sector, (marine, rail, aerospace), as well as many other industrial applications, (construction, plant machinery, etc.).

In the following, the invention will be described in more detail by referring to examples and Figures which show the results of tests conducted on embodiments of the claimed invention. Neither the detailed description nor the Figures are intended to limit the scope of protection which is defined by the appended claims.
Fig. 1 is a plot of a stress-displacement curve for an alloy according to the invention.
Fig. 2 is a plot of the effect of Cu on the equilibrium solidus and liquidus temperature.
Fig. 3 is a plot of the effect of Cu on calculated hot-cracking susceptibility.
Fig. 4 is a plot of the effect of Cu on joint ductility.
Fig. 5 is a plot of the effect of Cu on joint strength.
Fig. 6 is a plot of the effect of Si on the equilibrium solidus and liquidus temperature
Fig. 7 is a plot of the effect of Si on joint ductility.
Fig. 8 is a plot of the effect of Si on joint strength.
Fig. 9 is a plot of the effect of Mg on bending and elongation.
Fig. 10 is a plot of the effect of Mg on weld quality.
Fig. 11 is a plot of the effect of Mg on joint ductility.
Fig. 12 shows two images of the interface produced when an AlSi10 alloy is welded to steel sheet including phase analysis
Fig. 13 shows two images of the interface produced when an alloy according to the invention is welded to steel sheet including phase analysis
Fig. 14 is a plot of the stress-displacement curves for two composite sheets after joining to steel, one according to the invention and another according to the prior art,

### Example 1

Table 1 lists the compositions of alloys cast in the form of small ingots, each ingot measuring 20x150x200mm.

**Table 1:**

| Sample | Si | Fe | Cu | Mn | Mg |
|---|---|---|---|---|---|
| 1 | 0.50 | 0.30 | 0.46 | <0.01 | <0.01 |
| 2 | 0.51 | 0.19 | 1.02 | <0.01 | <0.01 |
| 3 | 0.51 | 0.31 | 1.48 | <0.01 | <0.01 |
| 4 | 0.005 | 0.20 | 0.99 | <0.01 | <0.01 |
| 5 | 0.98 | 0.20 | 1.02 | <0.01 | <0.01 |
| 6 | 1.48 | 0.20 | 0.98 | <0.01 | <0.01 |
| 7 | 2.97 | 0.20 | 1.00 | <0.01 | <0.01 |
| 8 | 0.51 | 0.20 | 0.98 | <0.01 | 0.26 |
| 9 | 0.51 | 0.20 | 0.99 | <0.01 | 0.50 |
| 10 | 0.51 | 0.21 | 1.02 | <0.01 | 2.00 |

All alloys contained less than 0.05 of other elements individually and less than 0.15 in total, the balance being aluminium.

The ingots were homogenized in an air furnace at 550°C for 6hours, hot-rolled to 10mm and cold rolled to 1 mm. The sheet samples were annealed at 430°C for 1 hour to cause recrystallization. A final leveling operation was applied to the 1 mm sheet.

Sheet samples were then joined by a fluxless laser welding process to a 1mm sheet of low-alloyed steel coated with a 7µm zinc layer (hot dip galvanized) using an Nd-YAG laser with a constant power of 3kW. The joining geometry was flange welding (Kehlnaht) with a laser angle of 60° and no gap between the two sheets. The laser speed was 4m/min for all alloy combinations.

The compositional effect of the different elements on the equilibrium solidus and liquidus temperatures was calculated using commercial thermodynamic software from JMatPro coupled to in-house database. The hot cracking susceptibility was also calculated on the basis of thermodynamics calculation of the solid fraction evolution through the solidification interval. In both cases, nominal alloy compositions were used.

All samples of joined sheets were subjected to dye penetrant inspection (DPI) to assess the visual integrity of the joints. The quality of the joint under DPI was based on a simple ranking system from 1 to 4, with 1 being good, 4 being bad (containing a large number of hot-cracks or/and coarse porosity).

The nature and distribution of intermetallics produced in the interface zone was evaluated by conventional SEM and EDX analysis.

The joined samples were also subjected to lap shear tensile testing to assess joint fracture strength and ductility. It is not appropriate to use conventional stress-strain curves in such figures because the test configuration means that the tensile stress, and thus plastic deformation, is not constant throughout the specimen. The results of tensile tests on lap shear joints are presented as equivalent stress in the aluminium section against grip-to-grip distance during the test, (described herein as standard travel). The equivalent stress within the aluminium part of the joined sample is the nominal force divided by the cross-sectional area of the aluminium section. The standard travel is an indication of the ductility of the joint.

Some samples were subjected to 3-point bending tests to evaluate formability. The formability of the samples was measured using a bend test based on DIN 50111, but with slight modifications to the procedure. In this test a 60mm x 60mm piece of sheet, with a prior pre-straining of 10% (uniaxial stretching), was placed over two cylindrical rolls, the rolls being separated by a distance equal to twice the sheet thickness. Each roll diameter was 30mm. Under load, a tapered punch bar of width 100mm pushes the sheet into the gap between the rolls. The punch force is measured as well as the displacement. At the point of plastic deformation, (i.e. the start of cracking), the load necessary to deform the sheet falls, the punch force reduces and the test is automatically stopped. The sheet thus tested is deformed into a V shape and the internal angle of the V is measured. In this test a lower angle translates into better formability of the sheet. This test, (hereinafter referred to as "the modified DIN 50111 test"), is preferable to other formability tests because the results do not depend so much, if at all, on operator judgement.

Samples 1-3 illustrate the effect of Cu on the performance of the alloys. Samples 2 with 5-7 illustrate the effect of Si on performance. Samples 2 with 8-10 illustrate the effect of Mg on performance.

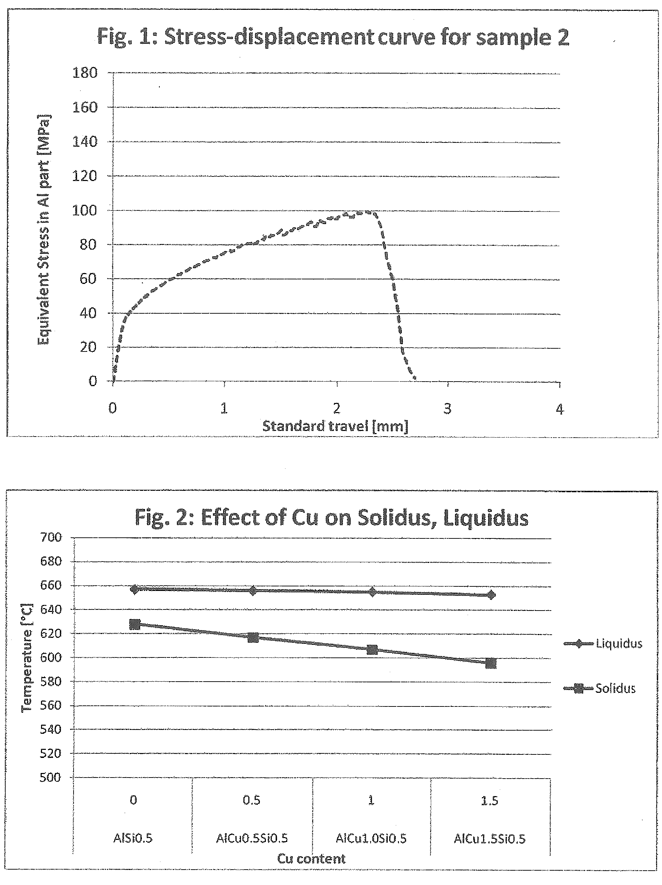

Figure 1 shows the stress-displacement curve for sample 2 after joining. The standard travel of the test piece, proportional to elongation is very high, indicating a ductile fracture mode which was also apparent in the fracture surface.

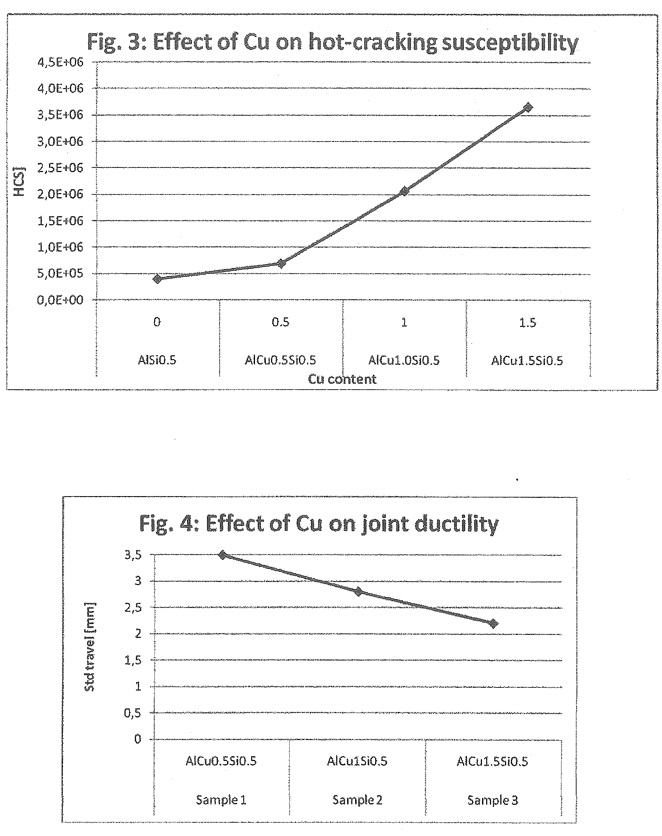

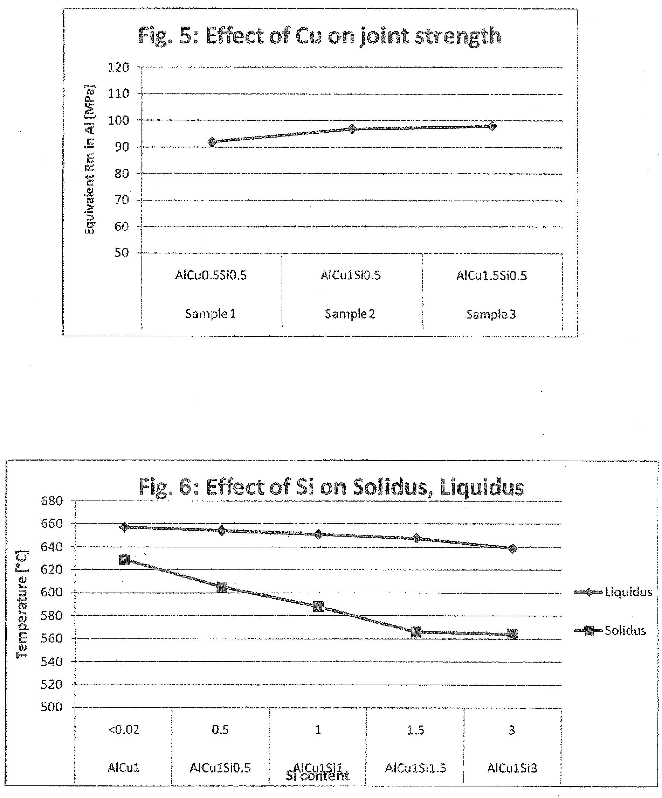

Effect of Cu. Figure 2 shows the effect of increasing Cu content to a base composition of Al0.5Si on the solidus of the alloys. Adding Cu reduces the solidus temperature and improves wettability. Figure 3 shows the effect of Cu on hot-cracking susceptibility with hot-cracking more likely as the Cu content increases up to 1.5%. Figure 4 shows the effect of Cu on joint ductility. Figure 5 shows the effect of Cu on the joint fracture strength. Increasing Cu from 0.5 to 1.0% increases fracture strength but it falls again slightly if the Cu content is increased towards 1.5%. From Figures 3, 4 and 5 we can see that the Cu content should be not be >1.5% and is preferably up to 1.25%.

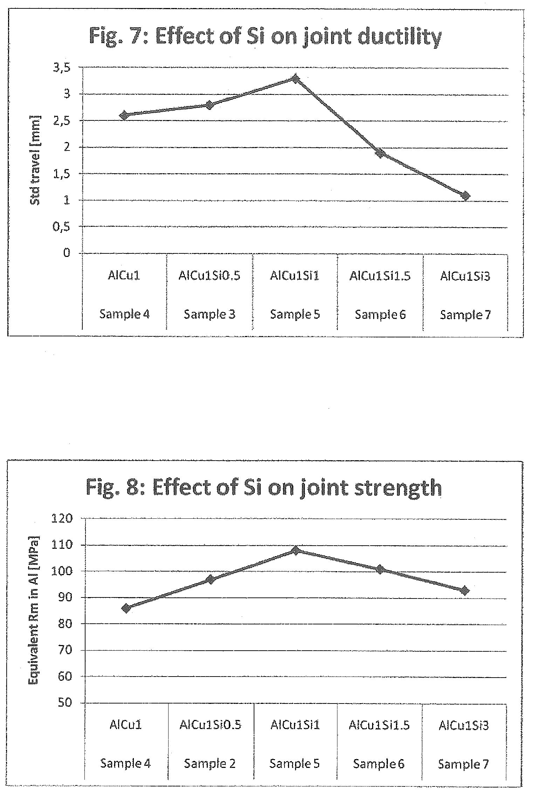

Effect of Si. Figure 6 shows the effect of increasing Si content to a base composition of Al1.0Cu on the solidus of the alloys. Adding Si reduces the solidus temperature and improves wettability. Figure 7 shows the effect of Si on joint ductility. Increasing Si content up to 1.0% improves bond ductility but there is a rapid decline in bond ductility as the Si content increases to 1.5% and beyond. Figure 8 shows that increasing the Si content leads to an increase in joint fracture strength up to a 1% addition but the fracture strength declines as more Si is added. From Figures 7 and 8, we can see that Si should be limited to no more than 1.5% and preferably no more than 1.25% to maintain good joint qualities in terms of ductility and fracture strength.

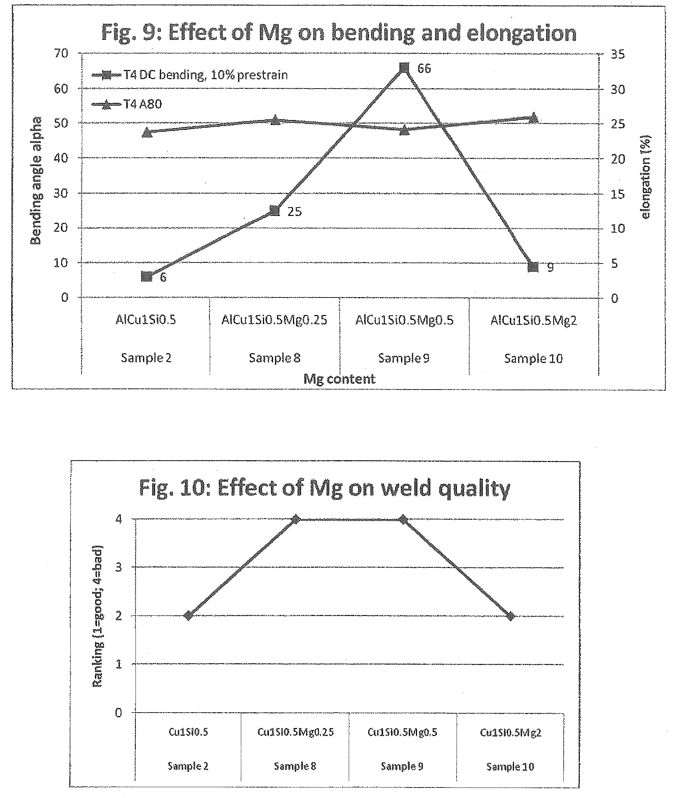

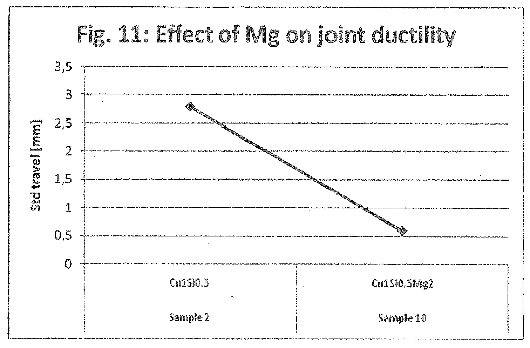

Effect of Mg. Figure 9 shows the effect of Mg content on bendability as measured using the modified DIN 50111 test. The effect on elongation is minimal. As the Mg content increases, the bendability of samples prestrained by 10% diminishes towards an Mg content of 0.5 but then improves again as the Mg content is raised further to 2%. Figure 10 shows the effect of Mg content on visual weld quality after DPI. Additions of Mg from essentially no Mg to 0.5Mg led to worse weld quality, (coarse porosity and the presence of weld cracks), but the weld quality improved again when 2% Mg was added. The effect of Mg on weld ductility is shown in Figure 11 and increased Mg content lowers weld ductility. For these reasons the Mg content is <0.1.

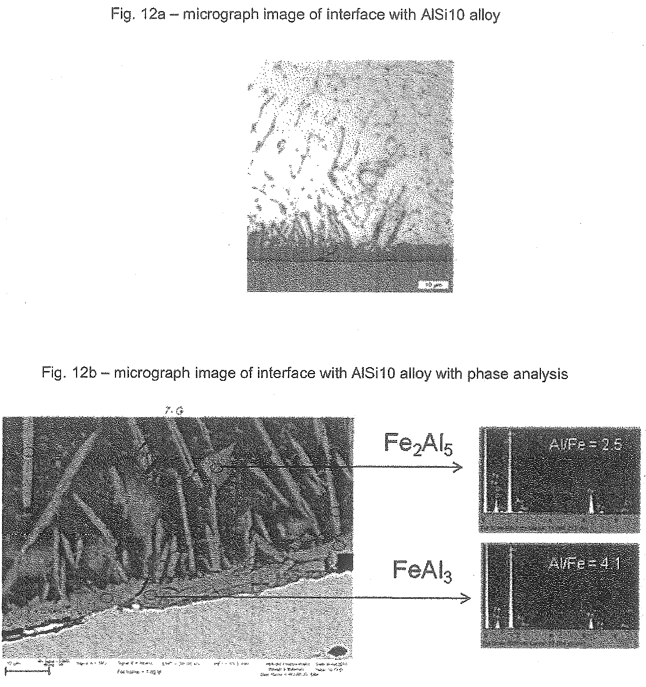

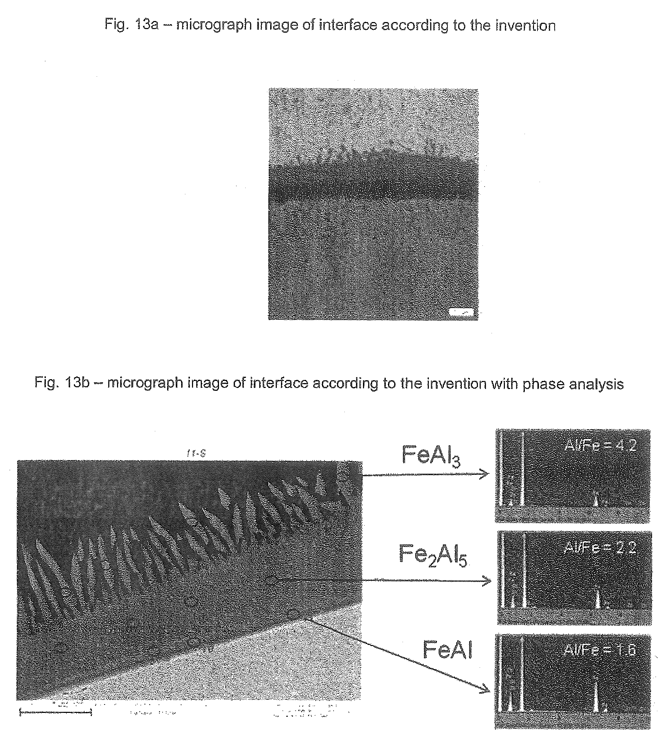

Figures 12, a) and b), show SEM images of the interface seen with AlSi10 alloys (sample 0) joined to steel. In the interface produced with AlSi10 alloys the width of the interface is approximately 10µm and the region immediately next to the steel alloy comprises an intermetallic zone dominated by FeAl₃ (high Al/Fe ratio, in atomic%). The brittle structure is evidenced by the high amount of micro-cracks in the layer. Figures 13, a) and b), show SEM images and EDX spectra of the interface produced when sample 2 was joined to steel. The width of the interface is approximately 20µm and the image reveals a dense and crack-free intermetallic layer. EDX analysis clearly shows that the continuous intermetallic layer at the interface is composed of two phases with various Al/Fe ratios. A third region on the top of the layer, with intermetallics in the shape of needles and a higher Al/Fe ratio is present. The first two intermetallic types are close to the FeAl and Fe₂Al₅ stoichiometry, whereas the third type is close to the more brittle FeAl₃. There are fundamental differences between the interfaces including the presence of an FeAl-type layer adjacent the steel component when the steel component is joined to the inventive alloy.

### Example 2

Two composite sheet products were produced where the "core" layer was an AA6016 alloy and a single "clad" layer was applied of either an Al-Si alloy of the prior art or an Al-Cu-Si alloy of the present invention. The clad layers in each sample accounted for 10%, (+/-1%), of the total sheet thickness. The alloy compositions of each layer are shown in Table 2.

**Table 2:**

| Sample | Si | Fe | Cu | Mn | Mg |
|---|---|---|---|---|---|
| Core alloy | 0.61 | 0.18 | 0.15 | 0.05 | 0.67 |
| 11 clad | 9.91 | 0.11 | <0.01 | <0.01 | <0.01 |
| 12 clad | 0.51 | 0.17 | 0.98 | 0.06 | <0.01 |

The ingots were homogenized in an air furnace at 550°C for 6hours, hot rolled to 10mm and cold rolled to 1mm. The sheet samples were solution heat treated at 540°C for 40s, rapidly cooled by air fans and then pre-aged by holding samples at 100°C for 1 hr.

Some samples were allowed to naturally age to the T4PX condition after being subjected to a 10% pre-strain, a simulation of a typical forming operation. Other samples were further aged to the T8X (paint-baked) condition by subjecting them to a 2% pre-strain followed by ageing at 185°C for 20 minutes and yet more samples were prepared in the T62 temper by subjecting them to a heat treatment at 205°C for 30 minutes. The mechanical properties for sample 12 in three different temper conditions are summarized in Table 3.

**Table 3:**

| T4PX | | | | T8X | | | T62 | | |
|---|---|---|---|---|---|---|---|---|---|
| Rp0.2 | Rm | A80 | DC bend angle | Rp0.2 | Rm | A80 | Rp0.2 | Rm | A80 |
| MPa | MPa | % | ° | MPa | MPa | % | MPa | MPa | % |
| 112 | 227 | 25.6 | 15 | 218 | 281 | 19.1 | 242 | 289 | 13.5 |

They were then joined to steel sheet under the same laser welding conditions as described in example 1. The joined parts were mechanically tested to evaluate the strength and ductility of the joint.

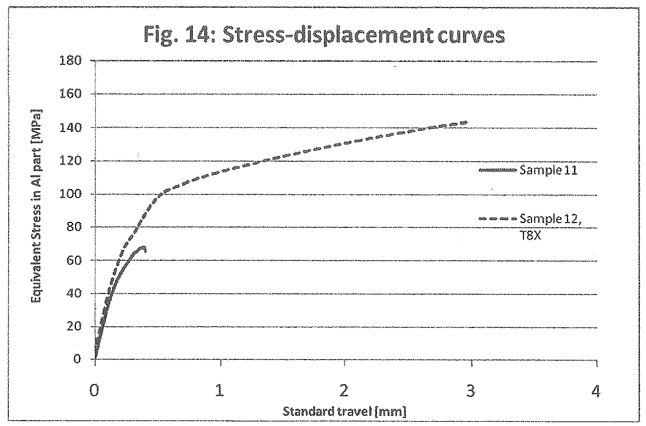

The stress-strain curve of Figure 14 shows the results for both samples 11 and 12. In the case of sample 12, the curve is for the product in the T8X condition. There is a dramatic improvement in the strength attained and the ductility for the product according to the invention compared with these qualities for a sample according to the prior art.

The invention is further described by the following items:
Item 1. Aluminium alloy comprising the following composition, all values in weight%:

| | |
|---|---|
| Si | 0.25-1.5 |
| Cu | 0.3-1.5 |
| Fe | up to 0.5 |
| Mg | <0.1 |
| Mn | up to 0.2 |

all other elements less than or equal to 0.05 each or less than or equal to 0.15 in total balance aluminium.
Item 2. An aluminium alloy according to any of the preceding items wherein the Si content is 0.5-1.25.
Item 3. An aluminium alloy according to any one of the preceding items wherein the Cu content is 0.3-1.25
Item 4. A joined structure wherein the joined structure comprises a steel component and an aluminium alloy component joined thereto and wherein the aluminium alloy component is made from an aluminium alloy according to item 1.
Item 5. A joined structure according to item 4 wherein the interface zone between the steel component and the aluminium alloy component is characterized by an FeAl layer adjacent the steel component.
Item 6. A composite aluminium sheet product comprising a core layer and at least one clad layer wherein the at least one clad layer is an aluminium alloy comprising the following composition, all values in weight%:

| | |
|---|---|
| Si | 0.25-1.5 |
| Cu | 0.3-1.5 |
| Fe | up to 0.5 |
| Mg | <0.1 |
| Mn | up to 0.2 |

all other elements less than or equal to 0.05 each or less than or equal to 0.15 in total balance aluminium.
Item 7. A composite aluminium sheet product according to item 6 wherein the core layer is made from an alloy selected from the group of 5XXX and 6XXX series alloys.
Item 8. A composite aluminium sheet product according to item 6 wherein the core layer is made from an alloy selected from the group consisting of AA6016, AA6016A, AA6014, AA6011, AA6111, AA6009, AA6010, AA6022 and AA6451.
Item 9. A composite aluminium sheet product according to item 6 wherein the core layer is made from an alloy selected from the group consisting of AA5005, AA5152, AA5052, AA5018, AA5454, AA5754, AA5056, AA5456, AA5182, AA5186, AA5059, AA5083 and AA5383.
Item 10. A joined structure wherein the joined structure comprises a steel component and an aluminium alloy component joined thereto and wherein the aluminium alloy component is made from a composite aluminium sheet product according to item 6.
Item 11. A method of making a joined structure wherein the joined structure comprises a steel component and an aluminium component and wherein the steel and aluminium components are joined by a thermal process that causes at least a part of the aluminium component to melt and wherein the aluminium component is made from an alloy according to item 1.
Item 12. A method of making a joined structure wherein the joined structure comprises a steel component and an aluminium component and wherein the steel and aluminium components are joined by a thermal process that causes at least a part of the aluminium component to melt and wherein the aluminium component is made from a composite aluminium sheet product according to item 6.
Item 13. A method according to item 12 wherein the thermal process is laser welding.

## Claims

1. Aluminium alloy comprising the following composition, all values in weight %:
Si 0.25 - 1.5
Cu 0.3 - 1.5
Fe up to 0.5
Mg <0.1
Mn up to 0.2
unavoidable impurities less than or equal to 0.05 each or less than or
equal to 0.15 in total balance aluminium, wherein the aluminium alloy is an aluminium alloy clad layer.

2. An aluminium alloy as claimed in claim 1 wherein the Si content is 0.5-1.25.

3. An aluminium alloy as claimed in any of the preceding claims wherein the Cu content is 0.3 - 1.25.

4. An aluminium alloy as claimed in any of the preceding claims wherein the Mn content is <0,01.

5. An aluminium alloy as claimed in any of the preceding claims wherein the Mg content is <0.01.

6. An aluminium alloy as claimed in any of the preceding claims wherein the Mn content is <0.01 and/or the Mg content is <0.01.

7. A joined structure wherein the joined structure comprises a steel component and an aluminium alloy component joined thereto and wherein the aluminium alloy component is made from an aluminium alloy according to claim 1 to 6.

8. A joined structure according to claim 7 wherein the interface zone between the steel component and the aluminium alloy component is **characterized by** an FeAl layer adjacent the steel component.

9. A composite aluminium sheet product comprising a core layer and at least one clad layer wherein the at least one clad layer is an aluminium alloy comprising the following composition, all values in weight %:
| | |
|---|---|
| Si | 0.25 - 1.5 |
| Cu | 0.3 - 1.5 |
| Fe | up to 0.5 |
| Mg | <0.1 |
| Mn | up to 0.2 |
unavoidable impurities less than or equal to 0.05 each or less than or equal to 0.15 in total balance aluminium.

10. A composite aluminium sheet product as claimed in claim 9 wherein the core layer is made from an alloy selected from the group of 5XXX and 6XXX series alloys.

11. A composite aluminium sheet product as claimed in claim 10 wherein the core layer is made from an alloy selected from the group consisting of AA6016, AA6016A, AA6014, AA6011, AA6111, AA6009, AA6010, AA6022 and AA6451.

12. A composite aluminium sheet product as claimed in claim 10 wherein the core layer is made from an alloy selected from the group consisting of AA5005, AA5152, AA5052, AA5018, AA5454, AA5754, AA5056, AA 5456, AA5182, AA5186, AA5059, AA5083 and AA5383.

13. A joined structure wherein the joined structure comprises a steel component and an aluminium alloy component joined thereto and wherein the aluminium alloy component is made from a composite aluminium sheet product according to any of claims 9 to 12.

14. A method of making a joined structure wherein the joined structure comprises a steel component and an aluminium component and wherein the steel and aluminium components are joined by a thermal process, in particular by a fluxless joining procedure comprising a thermal process, that causes at least a part of the aluminium component to melt and wherein the aluminium component is made from an alloy according to any one of claims 1 to 6 or from a composite aluminium sheet product according to any one of claims 9 to 12.

15. A method as claimed in claim 14 wherein the thermal process is laser welding, in particular wherein the thermal process is fluxless brazing, braze welding or fluxless laser welding.

16. The joined structure of claim 13 having a DC bend angle of 15 in the T4PX condition.

17. The joined structure of claims 13 or 16, wherein the steel component is coated with zinc.

## Patentansprüche

1. Aluminiumlegierung, umfassend die folgende Zusammensetzung, worin alle Werte in Gewichts-% sind:
| | |
|---|---|
| Si | 0,25 - 1,5 |
| Cu | 0,3 - 1,5 |
| Fe | bis zu 0,5 |
| Mg | <0,1 |
| Mn | bis zu 0,2 |
unvermeidbare Verunreinigungen von jeweils kleiner oder gleich 0,05 oder weniger oder gleich 0,15 bezüglich der Gesamtmenge von Aluminium, worin die Aluminiumlegierung eine Aluminiumlegierung-Plattierschicht ist.

2. Aluminiumlegierung nach Anspruch 1, worin der Si-Gehalt 0,5 - 1,25 ist.

3. Aluminiumlegierung nach einem der vorhergehenden Ansprüche, worin der Cu-Gehalt 0,3 - 1,25 ist.

4. Aluminiumlegierung nach einem der vorhergehenden Ansprüche, worin der Mn-Gehalt <0,01 ist.

5. Aluminiumlegierung nach einem der vorhergehenden Ansprüche, worin der Mg-Gehalt <0,01 ist.

6. Aluminiumlegierung nach einem der vorhergehenden Ansprüche, worin der Mn-Gehalt <0,01 ist und/oder der Mg-Gehalt <0,01 ist.

7. Verbundstruktur, worin die Verbundstruktur eine Stahlkomponente und eine Aluminiumlegierungskomponente, die daran gebunden ist, umfasst, und worin die Aluminiumlegierungskomponente aus einer Aluminiumlegierung nach einem der Ansprüche 1 bis 6 hergestellt ist.

8. Verbundstruktur nach Anspruch 7, worin der Grenzbereich zwischen der Stahlkomponente und der Aluminiumlegierungskomponente charakterisiert ist durch eine FeAl-Schicht, die an die Stahlkomponente angrenzt.

9. Aluminiumverbundblechprodukt, umfassend eine Kernschicht und mindestens eine Plattierungsschicht, worin die mindestens eine Plattierungsschicht eine Aluminiumlegierung ist, umfassend die folgende Zusammensetzung, worin alle Werte in Gewicht-% sind:
| | |
|---|---|
| Si | 0,25 - 1,5 |
| Cu | 0,3 - 1,5 |
| Fe | bis 0,5 |
| Mg | <0,1 |
| Mn | bis 0,2, |
unvermeidbare Verunreinigungen von jeweils kleiner oder gleich 0,05 oder insgesamt kleiner oder gleich 0,15 bezüglich des gesamten Aluminium.

10. Aluminiumverbundblechprodukt nach Anspruch 9, worin die Kernschicht hergestellt ist aus einer Legierung, ausgewählt aus der Gruppe, bestehend aus Legierungen der 5XXX- und 6XXX-Reihen.

11. Aluminiumverbundblechprodukt nach Anspruch 10, worin die Kernschicht hergestellt ist aus einer Legierung, ausgewählt aus der Gruppe, bestehend aus AA6016, AA6016A, AA6014, AA6011, AA6111, AA6009, AA6010, AA6022 und AA6451.

12. Aluminiumverbundblechprodukt, nach Anspruch 10, worin die Kernschicht hergestellt ist aus einer Legierung, ausgewählt aus der Gruppe, bestehend aus AA5005, AA5152, AA5052, AA5018, AA5454, AA5754, AA 5056, AA5456, AA5182, AA5186, AA5059, AA5083 und AA 5383.

13. Verbundstruktur, worin die Verbundstruktur eine Stahlkomponente und eine Aluminiumlegierung-Komponente umfasst, die damit verbunden ist, und worin die Aluminiumlegierung-Komponente hergestellt ist aus einem Aluminiumverbundblechprodukt nach einem der Ansprüche 9 bis 12.

14. Verfahren zum Herstellen einer Verbundstruktur, worin die Verbundstruktur eine Stahlkomponente und eine Aluminiumkomponente umfasst, und worin die Stahl- und Aluminiumkomponenten durch ein thermisches Verfahren verbunden werden, insbesondere durch ein fließmittelfreies Verbindungsverfahren, umfassend ein thermisches Verfahren, das bewirkt, dass zumindest ein Teil der Aluminiumkomponente schmilzt, und worin die Aluminiumkomponente hergestellt wird aus einer Legierung nach einem der Ansprüche 1 bis 6 oder aus einem Aluminiumverbundblechprodukt nach einem der Ansprüche 9 bis 12.

15. Verfahren nach Anspruch 14, worin das thermische Verfahren Laserschweißen ist, insbesondere, worin das thermische Verfahren flussmittelfreies Hartlöten, Schweißlöten oder flussmittelfreies Laserschweißen ist.

16. Verbundstruktur nach Anspruch 13, worin das Aluminiumverbundblechprodukt einen DC-Biege-Winkel von 15 unter der T4PX-Bedingung aufweist.

17. Verbundstruktur nach den Ansprüchen 13 oder 16, worin die Stahlkomponente mit Zink beschichtet ist.

## Revendications

1. Alliage d'aluminium comprenant la composition suivante, toutes les valeurs s'entendant en % en poids :
| | |
|---|---|
| Si | 0,25 - 1,5 |
| Cu | 0,3 - 1,5 |
| Fe | jusqu'à 0,5 |
| Mg | < 0,1 |
| Mn | jusqu'à 0,2 |
impuretés inévitables inférieures ou égales à 0,05 chacune ou inférieures ou égales à 0,15 au total, solde d'aluminium, l'alliage d'aluminium étant une couche de revêtement en alliage d'aluminium.

2. Un alliage d'aluminium selon la revendication 1 dans lequel la teneur en Si est de 0,5 à 1,25.

3. Un alliage en aluminium selon l'une des revendications précédentes dans lequel la teneur en Cu est de 0,3 à 1,25.

4. Un alliage en aluminium selon l'une des revendications précédentes dans lequel la teneur en Mn est < 0,01.

5. Un alliage en aluminium selon l'une des revendications précédentes dans lequel la teneur en Mg est < 0,01.

6. Un alliage en aluminium selon l'une des revendications précédentes dans lequel la teneur en Mn est < 0,01 et/ou la teneur en Mg est < 0,01.

7. Une structure associée, la structure associée comprenant un composant d'acier et un composant d'alliage d'aluminium associé à celui-ci et le composant en alliage d'aluminium étant composé d'un alliage d'aluminium selon l'une des revendications 1 à 6.

8. Une structure associée selon la revendication 7, dans laquelle la zone d'interface entre le composant en acier et le composant en alliage d'aluminium est **caractérisée par** une couche de FeAl adjacente au composant en acier.

9. Un produit composite de feuille d'aluminium comprenant une couche centrale et au moins une couche de revêtement, dans lequel au moins une couche de revêtement est un alliage d'aluminium répondant à la composition suivante, toutes les valeurs s'entendant en pour cent en poids :
| | |
|---|---|
| Si | 0,25 - 1,5 |
| Cu | 0,3 - 1,5 |
| Fe | jusqu'à 0,5 |
| Mg | < 0,1 |
| Mn | jusqu'à 0,2 |
impuretés inévitables inférieures ou égales à 0,05 chacune ou inférieures ou égales à 0,15 au total, solde d'aluminium.

10. Un produit composite de feuille d'aluminium selon la revendication 9, dans lequel la couche centrale est composée d'un alliage choisi dans le groupe d'alliages de séries 5XXX et 6XXX.

11. Un produit de feuille composite d'aluminium selon la revendication 10, dans lequel la couche centrale est composée d'un alliage choisi dans le groupe composé d'AA6016, AA6016A, AA6014, AA6011, AA6111, AA6009, AA6010, AA6022 et AA6451.

12. Un produit de feuille composite d'aluminium selon la revendication 10, dans lequel la couche centrale est composée d'un alliage choisi dans le groupe composé d'AA5005, AA5152, AA5052, AA5018, AA5454, AA5754, AA5056, AA5456, AA5182, AA5186, AA5059, AA5083 etAA5383.

13. Une structure associée dans laquelle la structure associée comprend un composant en acier et un composant en alliage d'aluminium associé à celui-ci et le composant en alliage d'aluminium est composé d'un produit composite de feuille d'aluminium selon l'une des revendications 9 à 12.

14. Un procédé de fabrication d'une structure associée dans lequel la structure associée comprend un composant en acier et un composant en aluminium et dans lequel les composants en acier et en aluminium sont associés par un procédé thermique qui fait fondre au moins une partie du composant d'aluminium et le composant d'aluminium est composé d'un alliage selon l'une des revendications 1 à 6 ou d'un produit de feuille composite d'aluminium selon l'une des revendications 9 à 12.

15. Un procédé selon la revendication 14 dans lequel le procédé thermique est un soudage au laser, en particulier le procédé thermique est un brasage sans flux, un soudage-brasage ou un soudage au laser sans flux.

16. La structure associée de la revendication 13 dans laquelle le produit composite de feuille d'aluminium a un angle de flexion DC de 15 dans l'état T4PX.

17. La structure associée des revendications 13 ou 16, dans laquelle le composant en acier est revêtu de zinc.
